# EUROPEAN PATENT SPECIFICATION

(11) **EP 3 339 069 B1**
(45) Date of publication and mention of the grant of the patent: **27.01.2021**
(21) Application number: 17210397.0
(22) Date of filing: 22.12.2017
(51) Int. Cl.: B60J 5/06, B60J 7/06

(54) **FOLDING SUPPORT FOR FOLDING A TARPAULIN AND CONSTRUCTION FOR SUSPENDING THE TARPAULIN**
PLANENFALTHILFSMITTEL UND KONSTRUKTION ZUM AUFHÄNGEN DER PLANE
SUPPORT PLIANT POUR PLIER UNE BÂCHE ET CONSTRUCTION POUR SUSPENDRE LA BÂCHE

(30) Priority: 22.12.2016 BE 201605963
(43) Date of publication of application: 27.06.2018
(73) Proprietor: Versus-Invest, 3660 Oudsbergen (BE)
(72) Inventor: ROGIERS, Erik, 3850 Kozen (BE)
(74) Representative: Gevers Patents

(56) References cited:
- EP-A1- 0 882 612
- EP-A1- 1 782 986
- WO-A1-97/32745
- DE-U1-202015 002 704
- US-A- 4 545 611

## Description

The present invention relates to a folding support for folding a slidingly openable and closable tarpaulin, attached to laterally slidable elongated support means. The folding support has an exterior, arranged to push against the tarpaulin, and an interior located opposite to the exterior. The folding support comprises the following portions: first and second end portions located at two opposite ends of the folding support and arranged to attach the folding support to two of said elongated support means; a first rigid portion, hingedly connected by a first folding line to said first end portion, and a second rigid portion, hingedly connected by a second folding line to said second end portion; and a flexible central portion having a first end that is contiguous with said first rigid portion and a second end that is contiguous with said second rigid portion. Said rigid portions are mutually pivotable about said central portion between a folded shut position of the folding support, in which said folding lines are at a minimal distance to each other, and a folded open position of the folding support, in which said folding lines are at a maximal distance to each other.

Such a folding support is mainly used for supporting a tarpaulin in cargo spaces so that, when sliding open the tarpaulin, the tarpaulin is folded outwardly, i.e. away from the cargo space. This is desired since cargo spaces, in particular mobile cargo spaces, located on trucks, trailers, lorries or even train carriages, are required to meet predetermined maximal outer dimensions. These fixed maximal dimensions limit the cargo space. Sides of such cargo spaces are often closed off using a tarpaulin which is slidingly openable so as to provide access to the cargo space from the respective side. To achieve a maximal cargo space, it is therefore important that, when sliding open the tarpaulin, the folding support folds away from the cargo space so that the goods stacked in the cargo space cannot obstruct the sliding open of the tarpaulin.

Such folding supports are known from EP-B1-1782986. In this folding support, the central portion is constituted by a semicircular arc with its convex side forming the interior of the folding support. In this European patent, the folding supports are mounted into the roof between the slidingly openable and closable roof bars, but in practice, these folding supports are also mounted between the upright slidingly openable and closable supports (stanchions) so that the central portion is, to a certain extent, oriented towards the outside of the cargo space. When sliding open the support means, and thus the tarpaulin, the central portion is then pushed further out. However, it has been found in practice that these folding supports sometimes fold inward, even though they have been folded outwardly to a certain extent, which is unwanted, as the sliding open of the tarpaulin may then be obstructed by the folding supports, which can become stuck against the goods in the cargo space. This folding inward is possible because, when a force is exerted on the plane of the tarpaulin and thus on the folding supports, for instance by wind, the circular arc of the central portion can be compressed, enabling the central portion of the folding support to easily move from its outward facing position to an inward facing position. When the tarpaulin is slid open, the central portion of the folding support then folds further inward, causing the entire folding support to fold inward.

Moreover, it has been found that this folding support, in its folded shut position, has a quite wide, protruding end with relatively sharp edges that pushes against the tarpaulin, putting stress on the tarpaulin, which, in particular as a result of overly sharp folds in the free end of the folding support, may lead to damaging of the tarpaulin with repeated use.

Another such folding support is brought to market by "Sesam & Edscha". This folding support has a flat central portion instead of a semicircular central portion. It has also been found that, when a force is exerted on the tarpaulin and thus on the folding support, this folding support often folds outward instead of inward, which is not desirable.

It is an object of the present invention to provide a folding support which is less prone to fold inward, so that when sliding open the tarpaulin, the folding plates will fold outward.

To this end, the folding plate according to the invention is characterized in that, in said folded open position of the folding support, said central portion has a length, measured along the shortest possible straight line between said ends, of 4 cm to 12 cm, and that, also in said folded open position of the folding support, said central portion comprises a concave interior, having a first sagittal height comprised between 1.5 and 25% of said length (D), and a convex exterior having a second sagittal height comprised between 1.5 and 25% of said length (D).

It was found that a small curvature of the central portion, oriented toward the exterior of the folding support, necessitates greater force, when compared to the known folding supports, to move the folding support to a position beyond its position of equilibrium where, if the tarpaulin is slid open, the folding support folds further inward and no longer automatically folds back outward by itself. Because a greater force is needed before the folding support reaches a position in which it would fold inward when sliding open the support means, the folding support is less prone to fold inward.

Moreover, due to the design of the central portion, the folding support in its folded shut position is less wide and has fewer sharp edges when compared to the folding support described in EP-B1-1782986. This reduces stress and local pressure on the tarpaulin, reducing the risk of damage to the tarpaulin.

In an embodiment, said central portion has a center and a thickness that decreases from both of its ends towards said center.

Thus, in this embodiment, the central portion is more flexible towards the center, where, consequently, the greatest flexure occurs.

In an embodiment, the exterior of said central portion and the exteriors of said rigid portions, in said folded open position of the folding support, at the location of said ends, form an angle comprised between 150° and 177°, wherein said angle (β) is preferably greater than 160° and more preferably greater than 170°.

In this embodiment, the central portion, at its ends, already forms an angle with the adjacent rigid portions, so that a minimal curvature is already present at the ends of the central portion. In other words, the required curvature of the central portion is spread over a maximal distance, namely over the full length of the central portion. This spreading of the curvature reduces the tendency of sharp edges to be formed in the folded shut position of the folding support, which further reduces the risk of damage to the tarpaulin.

In an embodiment, said first sagittal height and said second sagittal height are smaller than 20% of said length (D), preferably smaller than 15%, more preferably smaller than 10% and most preferably smaller than 5% of said length (D), wherein said first sagittal height (P₁) and said second sagittal height (P₂) are preferably greater than 2.0% of said length (D) and more preferably greater than 2.5% of said length (D).

In an embodiment, said length of said central portion is greater than 5 cm, preferably greater than 6 cm, and smaller than 9.5 cm, preferably smaller than 7 cm.

In an embodiment, said concave interior forms a first arc, in particular a circular arc, and said convex exterior forms a second arc, in particular a circular arc.

In a preferred embodiment, each of said arcs has a radius of curvature comprised between 10 and 100 cm, which radius of curvature is preferably greater than 15 cm, more preferably greater than 20 cm, and which radius of curvature is preferably smaller than 50 cm, more preferably smaller than 30 cm.

In an alternative preferred embodiment, each of said arcs extends from said first end up to said second end (i.e., over the full length of the central portion), wherein the radius of curvature of each of the arcs is everywhere comprised between 10 and 100 cm, and wherein the radius of curvature of each of the arcs everywhere is preferably greater than 15 cm and more preferably greater than 20 cm, and wherein the radius of curvature of each of the arcs everywhere is preferably smaller than 50 cm and more preferably smaller than 30 cm.

In this alternative preferred embodiment, the entire central portion is curved, both at its interior and at its exterior. Thus, the required curvature of the central portion is spread over a maximal distance, namely over the full length of the central portion. This spreading of the curvature reduces the tendency of sharp edges to form in the folded shut position of the folding support, which further reduces the risk of damage to the tarpaulin.

Preferably, each of said arcs is a circular arc, of which the radius of curvature is constant. The use of a constant radius of curvature even further reduces the tendency of sharp edges to form in the folded shut position of the folding support, further reducing the risk of damage to the tarpaulin.

In an embodiment, the folding support (10) is manufactured in one piece by injection molding from a plastic material, preferably a thermoplastic plastic material, in particular comprising polypropylene.

In an embodiment, when moving the folding support from said folded open position to said folded shut position, said rigid portions hingedly pivot about said folding lines over an angle of at least 60°, preferably at least 70° and more preferably at least 80°.

In an embodiment, said first folding line is parallel to said second folding line, or said first folding line and said second folding line form an angle relative to each other which is smaller than 10°.

In an embodiment, said end portions each comprise a snapping system, which snapping systems are arranged to cooperate with a corresponding snapping system on said elongated support means to snap-fix the folding support onto the latter.

In this embodiment, the folding support is quickly and easily attachable to the support means.

In an embodiment, said rigid portions comprise a substantially planar plate having a number of upright ribs, wherein said planar plates form a portion of the interior of the folding support and wherein said upright ribs form a portion of the exterior of the folding support.

In this embodiment, only a small amount of material is needed for manufacturing the rigid portions, while still offering sufficient strength. Furthermore, a planar interior is achieved which forms part of the interior of the cargo space.

It is a further object of the present invention to provide a construction for suspending a tarpaulin for covering a cargo space, wherein, when sliding open the tarpaulin, the tarpaulin is less prone to fold inward.

To this end, the construction according to the invention comprises an upper supporting rail located at the level of a top of the cargo space; a lower supporting rail located at the level of a bottom of the cargo space; and a plurality of elongated support means that are laterally slidable along said upper and lower supporting rails, connecting said upper supporting rail to said lower supporting rail, wherein said tarpaulin is arranged to be attached to said elongated support means so that the tarpaulin, by laterally sliding the elongated support means, is moveable between an open position and a closed position, wherein the construction further comprises a plurality of folding supports as described above and wherein each of the folding supports is attached to two adjacent elongated support means.

This construction offers the same advantages as the folding support as described above, as a result of which, when sliding the tarpaulin onto the sidewall of the construction, the tarpaulin is more prone to fold away from the cargo space.

In an embodiment, the construction comprises: a further tarpaulin, a further upper supporting rail located at the level of the top of the cargo space and extending parallel to said upper supporting rail; a plurality of roof bars that are slidable along said upper supporting rail and said further upper supporting rail, interconnecting said upper supporting rails, wherein said further tarpaulin is arranged to be attached to said roof bars so that the tarpaulin, by laterally sliding the roof bars, is moveable between an open position and a closed position; and a plurality of further folding supports as described above, wherein each of the further folding supports is attached to two adjacent roof bars.

In this construction, then, the roof of the cargo space is slidable, wherein the tarpaulin is more prone to fold away from the cargo space. The latter is especially advantageous when the folding supports are not mounted over the upper supporting rails, but rather next to them, so as to limit the total height taken up by the upper supporting rails and by the folding supports, since the folding supports can then be provided at the same height as the supporting rails.

It is an object of the present invention to provide a construction for suspending a tarpaulin for covering a cargo space, wherein, when sliding open the tarpaulin, the tarpaulin is less prone to fold inward.

To this end, the construction according to the invention comprises: an upper supporting rail and a further upper supporting rail, each located at the level of a top of the cargo space and extending parallel to each other; and a plurality of roof bars that are slidable along said upper supporting rail and said further upper supporting rail, interconnecting said upper supporting rails, wherein said tarpaulin is arranged to be attached to said roof bars so that the tarpaulin, by laterally sliding the roof bars, is moveable between an open position and a closed position, wherein the construction further comprises a plurality of folding supports as described above and wherein each of the folding supports is attached to two adjacent roof bars.

This construction offers the same advantages as the folding support as described above, as a result of which, when sliding the tarpaulin onto the roof of the construction, the tarpaulin is more prone to fold away from the cargo space. The height taken up by the folding supports and the upper supporting rails can thus be limited by not placing the folding supports over the upper supporting rails, but rather next to them, at the same height as the upper supporting rails.

It is an object of the present invention to provide a transport vehicle with a cargo space, wherein the cargo space is covered by a tarpaulin, wherein, when sliding open the tarpaulin, the tarpaulin is less prone to fold inward.

This object is achieved by a transport vehicle having a cargo space, a tarpaulin for covering the cargo space and a construction as described above for suspending said tarpaulin.

This transport vehicle offers the same advantages as the construction as described above, as a result of which, when sliding the tarpaulin, the tarpaulin is more prone to fold away from the cargo space.

The invention will hereafter be further elucidated by means of the following description and the appended figures.
Figure 1 schematically shows a perspective view of a lorry comprising a construction for suspending a tarpaulin according to the invention, wherein the tarpaulin itself is shown at a distance in front of this construction;
Figure 2 shows a side view of the lorry shown in figure 1 from which the tarpaulin is removed, so that the construction of elongated support means, in particular of stanchions, for suspending and slidingly opening and closing of the tarpaulin, with folding supports according to the present invention in-between, is visible;
Figure 3 shows on a larger scale a detail of the upright support means with the folding supports in-between in the slid shut position of the tarpaulin as shown in figure 2;
Figure 4 shows a cross section of the detail in Figure 3 along the line IV-IV, indicated in Figure 3.
Figure 5 is analogous to figure 3, but shows the upright support means with the folding supports in-between in the slid open position of the tarpaulin;
Figure 6 shows a cross section along the line VI-VI in Figure 5, wherein the slid open and folded tarpaulin is also shown;
Figures 7 and 8 each show a perspective view of the exterior and the interior, respectively, of the folding support used in the construction according to the previous figures;
Figure 9 shows a longitudinal cross section through the folding support of Figures 7 and 8; and
Figure 10 shows on a larger scale the center part of the folding support shown in Figure 9.

The present invention will hereafter be described by means of specific embodiments and in reference to certain figures, yet the invention is not limited thereto and is only defined by the claims. The figures shown here are only schematic representations and are nonlimiting.

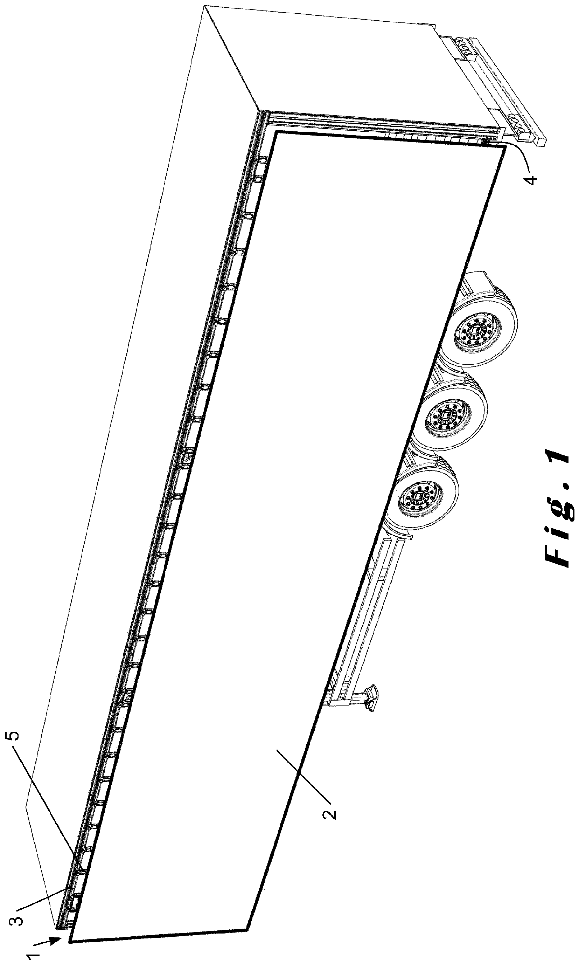

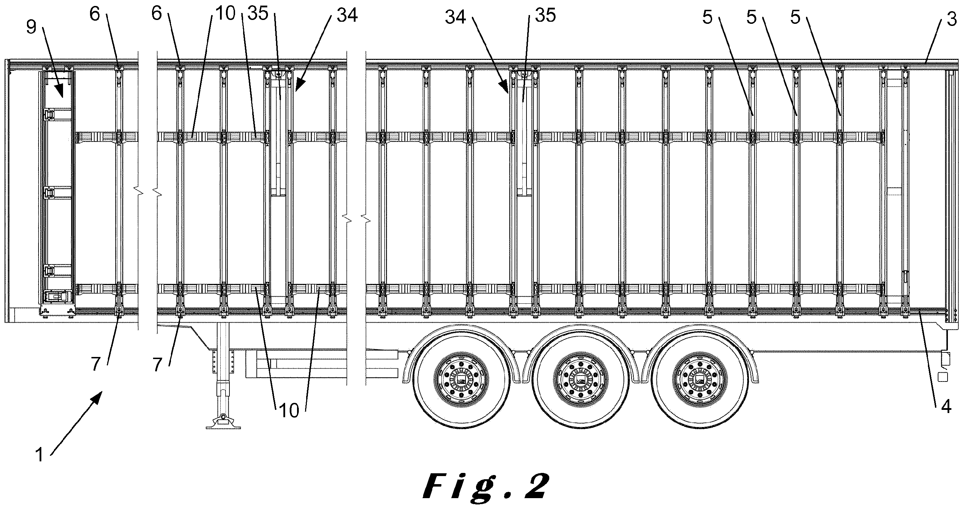

Figures 1 and 2 show a perspective view and a side view, respectively, of a lorry provided with a construction 1 for suspending a tarpaulin 2 for closing off a cargo space. The cargo space can be used in different applications, for instance a lorry of a truck, a train carriage, a transport vehicle having a fixedly mounted cargo space, a container, etc. The construction 1 shown in Figures 1 and 2 forms the sidewall of the cargo space. It is clear that the same construction 1 can also be used for a second sidewall of the cargo space. Likewise, a similar construction can also be used for a roof of the cargo space. The person skilled in the art will also appreciate that a cargo space is possible wherein only the roof can be opened, having a construction according to the invention, but wherein the sidewalls are fixed walls or are formed by a tarpaulin which is to be attached in the usual way using tensioning straps, and which is slidingly openable and closable only when these tensioning straps are released at the lower end of the tarpaulin.

The construction 1 comprises an upper and a lower supporting rail 3, 4, having a number of upright elongated support means 5 in-between. The upper supporting rail 3 is supported at its ends by a fixed connection with the lower supporting rail 4. In the embodiment shown, the support means 5 are also known as stanchions. In an embodiment not shown here, in which the construction 1 is used to form a roof of the cargo space, the support means 5 are known as roof bars and the supporting rails 3, 4 are formed by the two upper supporting rails.

Both the supporting rails 3, 4 and the support means 5 are made from metal, in particular aluminum, to provide a suitably strong yet light construction 1. The supporting rails 3, 4 and the support means 5 are preferably extruded.

The support means 5 are attached to both the upper and the lower supporting rail 3, 4 so that they can be slid in the longitudinal direction of the cargo space. This is possible by means of upper and lower carriages 6, 7. These carriages 6, 7 in particular ensure a suitably strong connection between the support means 5 and the supporting rails 3, 4. They further ensure that the support means 5 stay upright when slidingly opening and closing the tarpaulin 2. The upper carriages 6 are provided with a downward facing protrusion 8 that is able to slide up and down in the support means 5, to allow height differences to be absorbed when slidingly opening and closing the tarpaulin 2. Different variations of carriages 6, 7 are already known and commercially available, including the "Penta top roller" upper carriage 6 in the form of a "TRIKE curtain roller" of which an example is described in EP-A-3006241, and another example is described in EP-A-2371595. For the description of the carriages 6, 7, EP-A-2708395, EP-A-3006241 and EP-A-2371595 are incorporated herein as reference.

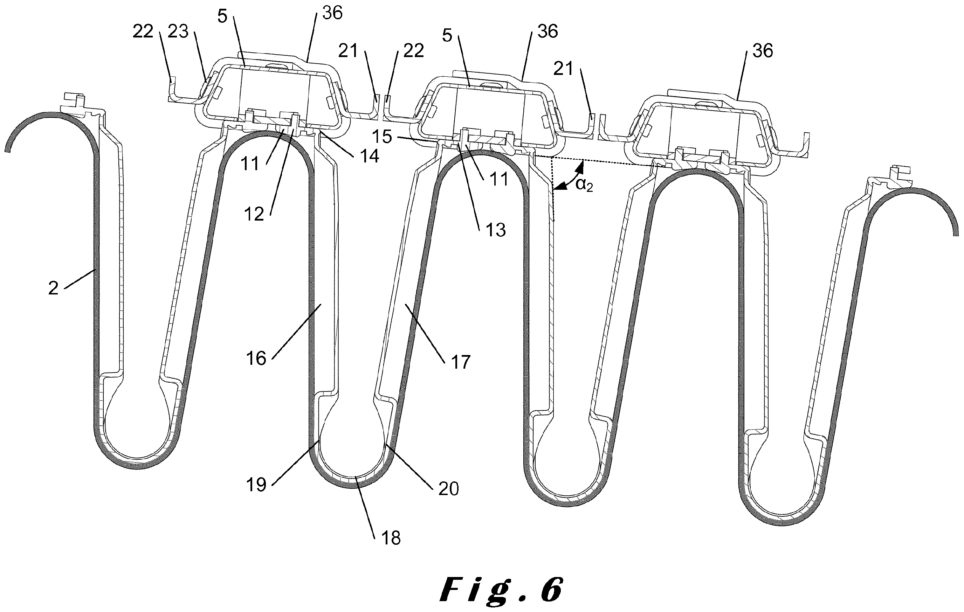

The tarpaulin 2 is attached to the carriages 6, 7 by means of rivets (not shown) and to the support means 5 by means of Velcro 36 (shown in Figure 6). The tarpaulin 2 thus moves along with the support means 5 and vice versa. Thus, by moving the support means 5 towards one end of the cargo space, for instance towards the rear end, the tarpaulin 2 can be slid open to allow access to the cargo space. In the same way, the tarpaulin 2 can also be closed, as will be clear to the person skilled in the art. It is clear that other connections between the tarpaulin 2 and the construction 1 are also possible. For instance, the tarpaulin 2 can also be attached to the support means 5 using rivets or loops. Furthermore, the tarpaulin 2 can also be attached to the carriages 6, 7 by means of loops (tensioning straps).

Figure 1 illustrates the closed state of the cargo space, i.e. the support means 5 are slid out. In this closed state, the tarpaulin 2 is attached at the front to a slidable door 9 and at the back to a fixed post. The tarpaulin 2 can then be tensioned to his fixed post using known means such as a rotatable rolling system with a ratchet mechanism. The slidable door 9 shown in Figure 1 is already known and described in BE 1021466. Likewise, a door 9 having a locking mechanism for the tarpaulin 1 as described in BE 1021894 can be used, wherein the tarpaulin 2 is also tensioned by closing the door 9.

In the embodiment shown in Figure 2, in addition to the support means 5, two reinforcements 34 having double upright support means 5 are also arranged between the supporting rails 3, 4. These reinforcements 34 are also slidable along the supporting rails 3, 4 and ensure a sturdier connection between the roof of the cargo space and the bottom of the cargo space due to the two upper carriages 6 being attached to the reinforcements 34 by means of tensioning straps 35. This is to prevent the roof of the cargo space having too much play in relation to the bottom of the cargo space during transport.

Furthermore, Figure 2 illustrates that each of the support means 5 is connected to its adjacent support means 5 by means of two folding supports 10, wherein one folding support 10 connects the top of the support means 5 and one folding support 10 connects the bottom of the support means 5. Preferably, the upper folding supports 10 are located at between 60 and 80% of the overall height of the support means 5. It is clear that, in different embodiments, only one folding support 10 can be provided between the support means 5, or that more than two folding supports 10 can be provided.

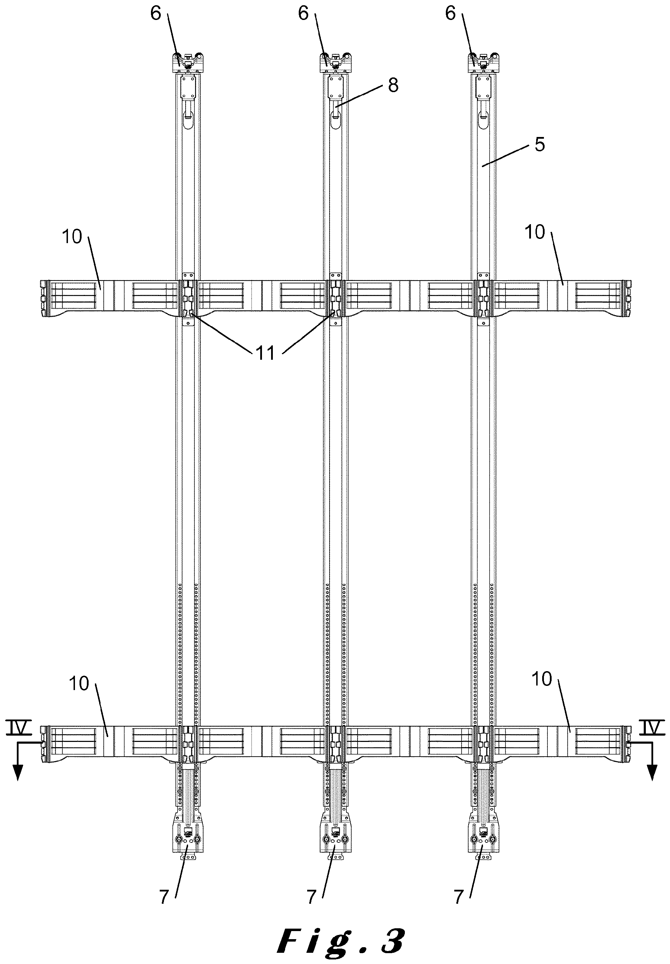

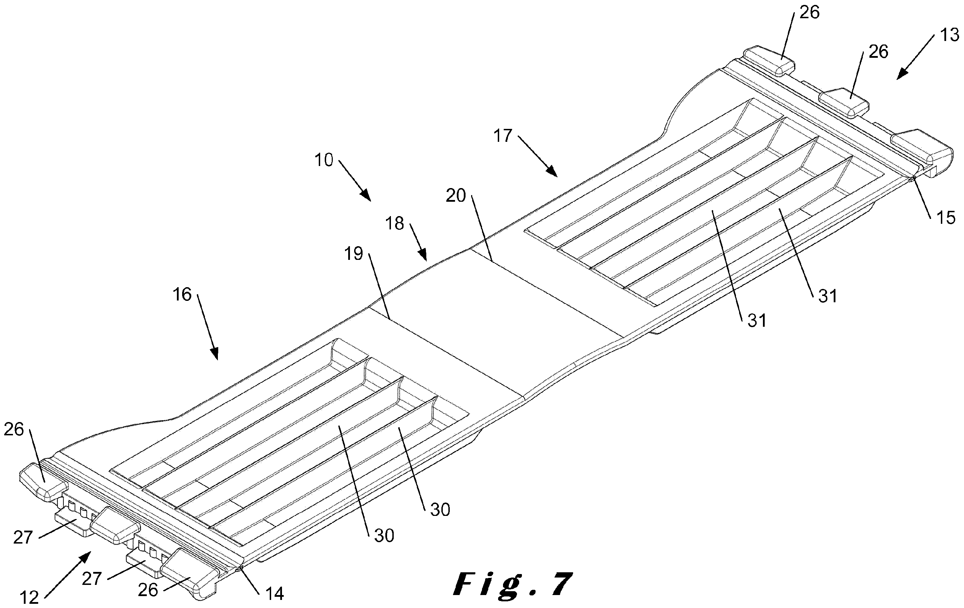

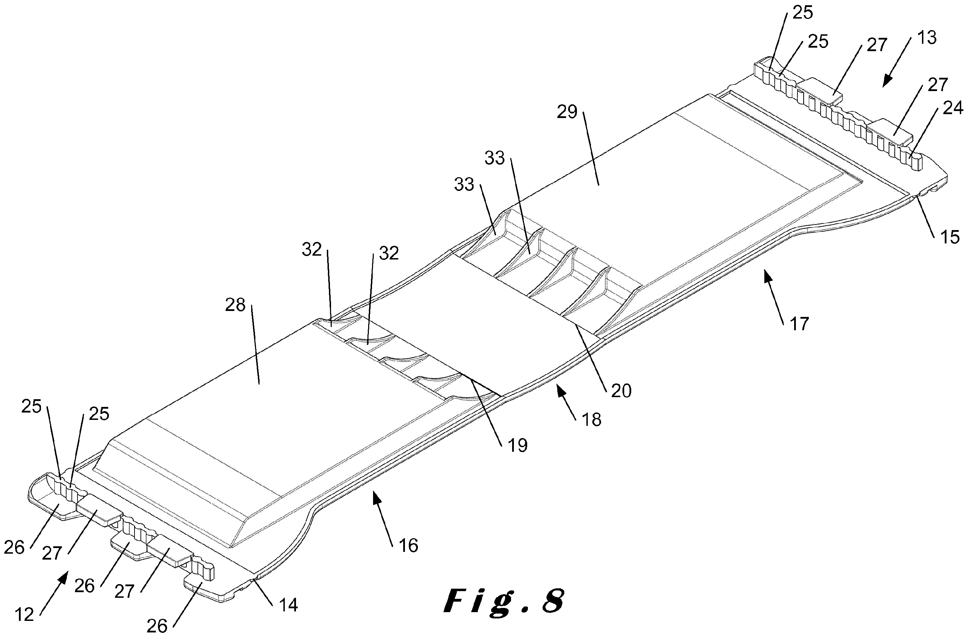

Figure 3 shows a detail of Figure 2 wherein the supporting rails 3, 4 are not shown. What is shown, are the carriages 6, 7 that ensure the attachment of the support means 5 onto the supporting rails 3, 4, wherein the support means 5 are separated by folding supports 10. The folding supports 10 are attached to the support means 5 by means of a snapping system 11 that snaps into a corresponding snapping system on the support means 5. These snapping systems 11 are already known and allow the folding supports 10 to be easily attached to the support means 5. Further details with regard to the snapping system 11 will hereafter be described in reference to Figures 7 and 8. The person skilled in the art will appreciate that other possibilities exist to attach the folding supports 10 to the support means 5.

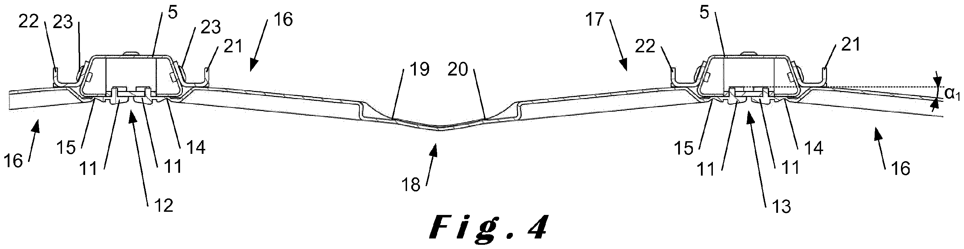

Figure 4 shows a cross section along the line IV-IV in Figure 3. On this cross section, the different parts of the folding support 10 are indicated. The folding support 10 has a first end portion 12 attached onto a first of the two adjacent support means 5 by means of the snapping system 11, and a second end portion 13 attached onto a second of the two adjacent support means 5 by means of a same snapping system 11. The snapping systems 11 are arranged so that the end portions 12, 13 are completely fixed onto the support means 5 and thus are unable to move in relation to the support means 5. Furthermore, both the first and the second end portion 12, 13 are connected to first and second rigid portions 16, 17, respectively, of the folding support 10, by means of first and second folding lines 14, 15, respectively. These rigid portions 16, 17 are in turn connected to each other by a flexible central portion 18. Specifically, a first end 19 of the central portion 18 is connected to the first rigid portion 16 and a second end 20 of the central portion 18 is connected to the second rigid portion 17. In particular, the folding support 10 is mounted in such a way that the central portion 18 is folded outward, i.e. towards the tarpaulin 2. More in particular, the tarpaulin 2 is mounted onto the support means 5 in such a way that when tensioning the tarpaulin 2, the folding supports still remain somewhat flexed. The tensioned tarpaulin 2 then lies closely against the exteriors of the folding supports 10.

In the embodiment shown, the folding supports 10 are made from plastic, preferably a thermoplastic plastic material that, in particular, comprises polypropylene. The folding supports 10 are made from one piece, in particular, by injection molding. In an alternative embodiment, the folding support 10 can also be made from other materials, for instance metal, in particular aluminum, or composite materials. Herein, the central portion 18 should be sufficiently flexible, which can for instance be achieved using a sufficiently thin layer of material. Moreover, different parts of the folding support 10 can be made from different materials, wherein these parts are then fixedly connected to each other. As an example, the rigid portions 16, 17 can be made from metal and the central portion 18 from plastic, or conversely, the central portion 18 can be made from a thin metal plate and the rigid portions 16, 17, in the same way as shown in the figures, from plastic. The metal and plastic parts can then for instance attached to each other by means of a snapping system or by means of rivets.

Furthermore, first and second abutments 21, 22 are also arranged onto the support means 5. These abutments 21, 22 are made from metal, in particular aluminum, and preferably from the same material as the support means 5. In the embodiment shown, the abutments 21, 22 are attached onto the support means 5 by means of a bolt 23. However, it is clear that there are other ways as well to attach the abutments 21, 22 to the support means 5, for instance by welding the abutments 21, 22.

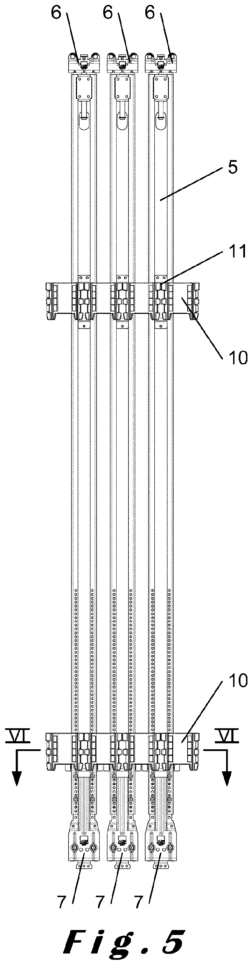

The abutments 21, 22 serve a dual function. Firstly, as illustrated in Figure 4, they are used to support the folding support 10 in the slid shut position of the tarpaulin. Specifically, in the slid shut position of the construction 1, the first abutment 21 abuts the interior of the first rigid portion 16 and the second abutment 22 abuts the interior of the second rigid portion 17. In this way, the abutments 21, 22 constitute an added measure in preventing the folding support 10 form folding towards the interior of the cargo space. The second function of the abutments 21, 22 is described below in reference to Figures 5 and 6.

Figure 5 shows a part of the slid open construction 1. Similarly to Figure 3, the carriages 6, 7 are shown, attached to the support means 5, which are separated by folding supports 10 attached to the support means 5 by means of a snapping system 11.

Figure 6 shows the same cross section as Figure 4, but for the slid open position of the construction 1 shown in Figure 5. Furthermore, on this figure, the tarpaulin 2 is indicated as well. The folding supports 10 are folded shut, meaning that the cargo space is open, and thus they push the tarpaulin 2 away from the cargo space, allowing the maximal volume of the cargo space to be used. Figure 6 also illustrates the second function of the abutments 21, 22. These abutments 21, 22 abut each other in the slid open position and thus determine the minimal distance between the support means 5 in the construction 1. It is clear that the folding supports 10 could be folded even further if these were not mounted onto the construction 1. This is because the folding supports 10 can be folded until the rigid portions 16, 17 abut each other. At the same time, this determines the folded shut position of the folding support 10, namely the position in which the folding lines 14, 15 are at a minimal distance to each other.

When comparing Figures 4 and 6 it is clearly visible that different parts of the folding support 10 pass through different mutual movements when sliding open the construction 1. As described above, the end portions 12, 13 are fixedly connected to the support means 5. During the sliding open of the construction 1 the rigid portions 16, 17 pivot about a respective end portion 12, 13, in particular about a respective folding line 14, 15. In the illustrated embodiment, the angle α₁ between the end portions 12, 13 and the rigid portions 16, 17, in the slid shut position of the tarpaulin, is approximately 9°, and the angle α₂ between the end portions 12, 13 and the rigid portions 16, 17, in the slid open position of the tarpaulin, is approximately 86°, so that both rigid portions 16, 17 turn over an angle of about 77° when slidingly opening and closing the tarpaulin 2. More generally, the pivoting movement of the rigid portions of the folding supports when slidingly opening and closing the tarpaulin covers an angle of at least 60°, preferably an angle of at least 70° and more preferably an angle of at least 75°.

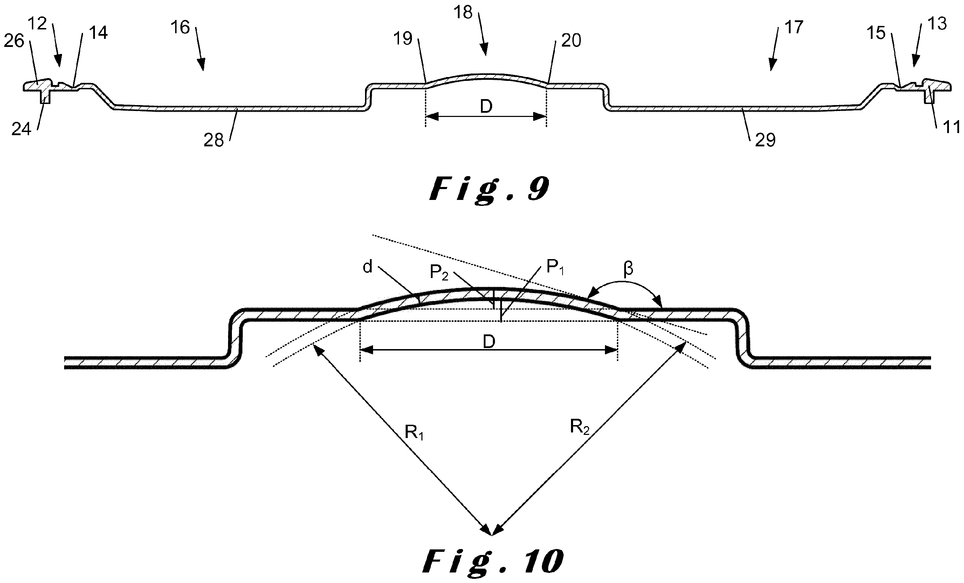

When comparing Figures 4 and 6, it is also clear that the central portion 18 exhibits a curvature towards the exterior of the cargo space, in the slid open position, and is more curved in the slid shut position. This means that the exterior of the central portion 18 is convex, while the interior of the central portion 18 is concave. Further details concerning the specific curvature of the central portion 18 are described below in reference to Figures 9 and 10.

Figures 7 and 8 each show a perspective view, respectively of the exterior and of the interior of the folding supports 10 used in the construction 1 described in reference to Figures 1 to 6. Figures 7 and 8 show details of the rigid portions 16, 17, the snapping system 11 on the end portions 12, 13 and the ends 19, 20 of the central portion 18.

Each snapping system 11 comprises an upright rim 24 having regularly spaced widened portions 25 therein. The rim 24 is arranged to fit into an opening (not shown) in the support means 5. Therein, the widened portions 25 ensure that the rim 24, and thus the folding support 10, is fixed onto the support means 5 at a specific height. Moreover, the widened portions 25 allow the rim to be fixed onto the support means 5 at different heights, as long as the support means 5 has a longer opening than the length of the rim 24. The rim 24 has a fixed end and a free end. With its fixed end, the rim 24 is fixed in the end portions 12, 13 of the folding support 10. The end portions 12, 13 are also, in the embodiment shown, provided with three projections 26 which are a part of the snapping system 11. These projections 26 have a substantially flat bottom arranged to be flush with the support means 5 (see Figure 4). The free end of the rim 24 has two projections 27 which are a part of the snapping system 11. The projections 26, 27 are arranged to cooperate with a corresponding snapping system (not shown) on the support means 5. The person skilled in the art will appreciate that more or fewer projections 26, 27 are also possible and that the rim 24 can also have one or more interruptions. Likewise, the rim 24 can also have differently shaped widened portions 25 or no widened portions 25 at all.

Also shown in Figure 7 is the fact that the first folding line 14 is parallel to the second folding line 15. Thus, the folding support 10 folds symmetrically in relation to the end portions 12, 13. In a different embodiment (not shown), the first folding line 14 and the second folding line 15 have an angle relative to each other which in particular is smaller than 10°.

Figures 7 and 8 show that the rigid portions 16, 17, on the interior of the folding support 10, are substantially flat and thus are formed by first and second planer plates 28, 29. These planar plates 28, 29 are in turn strengthened by upright first and second ribs 30, 31. The upright ribs 30, 31 thus form a part of the exterior of the folding support 10. Such an implementation ensures that the portions 16, 17 are sufficiently rigid so as not to flex during normal operation of the construction 1, i.e. not to flex while slidingly opening and closing the support means 5.

Figure 8 illustrates that the rigid portions 12, 13, at the interior of the folding support 10 are also provided with tapering first and second ribs 32, 33. These tapering ribs 32, 33 ensure that the part of the rigid portions 12, 13 adjacent to the central portion 18 is also sufficiently rigid to ensure that no flexing occurs during normal operation of the folding support 10. In particular, the tapering ribs 32, 33 determine the beginning of the central portion 18, since at the location where these ribs 32, 33 have fully tapered, the folding support becomes flexible. Consequently, the ends 19, 20 of the central portion 18 correspond to where the tapering ribs 32, 33 disappear.

Figure 9 shows a longitudinal cross section through the folding support 10 between the upright ribs 30, 31. The folding support 10 is shown here in its folded open position, namely, the position in which the folding lines 14, 15 are at a maximal distance to each other without eliminating the curvature in the central portion 18 of the folding support 10 by exerting a traction force on the folding support 10, in other words: by only allowing the rigid portions 16, 17 of the folding support 10 around the flexible central portion 18 to pivot with regard to each other until the folding lines 14, 15 are at a maximal distance to each other. Figure 10 shows on a larger scale the central part of the folding support, on which the different arcs, sagittal heights and radii of curvature are indicated, as discussed below.

The central portion 18 has a length D measured along the shortest possible straight line between the ends 19, 20 of the central portion 18, i.e. measured along a longitudinal cross section as shown in Figures 9 and 10, wherein the straight line is in the longitudinal axis (which is perpendicular to both folding lines 14, 18 when these are parallel, or which is perpendicular to the bisector of the angle formed by both folding lines when both folding lines are not parallel) of the folding support 10. This length D is comprised between 4 cm and 12 cm and is preferably greater than 5 cm, more preferably greater than 6 cm, and preferably smaller than 9.5 cm, more preferably smaller than 7 cm. In the illustrated embodiment, the length D is about 6.4 cm.

In Figures 9 and 10, it is clearly visible that, in the folded open position of the folding support 10, the central portion 18 thereof shows a curvature which is directed towards the exterior of the folding support 10 so that the exterior of the central portion 18 is convex while its inside is concave. The first and second arcs formed by respectively the interior and the exterior of the central portion 18 of the folding support 10 are shown in Figure 10. In this embodiment, in the folded open position of the folding support 10, both arcs substantially form a circular arc. The first circular arc has a first radius of curvature R₁ and a first sagittal height P₁ while the second circular arc has a second radius of curvature R₂ and a second sagittal height P₂. Both the first P₁ and the second sagittal height P₂ are comprised between 1.5 and 25% of the length D of the central portion and preferably between 2.0 and 20% of this length. Preferably, both the first P₁ and the second sagittal height P₂ are smaller than 15%, more preferably smaller than 10% and most preferably smaller than 5% of the length D. Moreover, both these sagittal heights are preferably greater than 2.0% of the length D and more preferably greater than 2.5% of this length D. Both sagittal heights are in particular between 1 and 5 mm. Preferably, both these sagittal heights are greater than 1.5 mm, more preferably greater than 2 mm, and preferably smaller than 3.5 mm, more preferably smaller than 2.5 mm. In the illustrated embodiment, the first sagittal height P₁ is about 2.2 mm and the second sagittal height P₂ is about 2.3 mm (and the length D is about 64 mm). Preferably, both radii of curvature R₁, R₂ are comprised between 10 and 100 cm, wherein these are preferably greater than 15 cm, more preferably greater than 20 cm, and preferably smaller than 50 cm, more preferably smaller than 30 cm. In the illustrated embodiment, the first radius of curvature R₁ is about 23.5 cm and the second radius of curvature R₂ is about 22.3 cm.

In an alternative embodiment, the interior and/or the exterior of the folding support 10 in the central portion 18 do not form a circular arc, but for instance a parabolic arc, an elliptical arc, etc. Furthermore, the arcs do not need to be symmetrical in relation to the center of the center part 18. Preferably, as is the case in the illustrated embodiment, both arcs of extend from the first end 19 to the second end 20, wherein at each point of the arcs the conditions of the radii of curvature R₁, R₂ as described above are satisfied.

In Figure 10, the thickness d of the central portion 18 of the folding support 10 is also indicated. In the embodiment shown, this thickness d in the center of the central portion 18 is about 2.3 mm. In particular, this thickness d decreases from both ends 19, 20 of the central portion 18 towards the center of the central portion 18. In the embodiment shown, the thickness d of the central portion 18 at both ends 19, 20 thereof is about 2.5 mm.

In Figure 10, the angle β between the central portion 18 and the adjacent part of the rigid portions 16, 17 at the exterior of the folding support 10 is also indicated. This angle β is preferably comprised between 150° and 177°. It is preferably greater than 160° and more preferably greater than 170°.

Within these limits, the central portion 18 of the folding support 10 always comprises a curvature towards the exterior of the cargo space. It was found that such a curvature necessitates a greater force, when compared to the known folding supports, to move the folding support 10 to a position wherein, if the tarpaulin 2 is slid open, the folding support 10 will no longer automatically fold back outward due to the elasticity of the material of the folding support 10, but on the contrary, will fold inward. In particular, a comparative test was carried out with the folding support 10 as described herein and with a similar folding support having a planar central portion instead of a curved central portion and having an Ω-shaped central portion as shown in the figures of EP-B1-1782986. For these tests, the pivoting end portions 12, 13 of the plates were first removed, after which the plates were placed with their ends between two fixed supports so that the rigid portions 17, 18 were both twisted over an angle of about 5° with regard to there folded open position. As a result, the folding supports were in a similar position as shown in Figure 4. Then, a measurement was made of the force required to be exerted in the center of the central portion 18 of the folding supports to push beyond the folded open position of the folding supports through to the other side. These tests showed that this force was substantially greater for the folding support 10 according to the present invention than for the corresponding folding support having a planar central portion, and in particular for the corresponding folding support having an Ω-shaped central portion.

## Claims

1. Folding support (10) for folding a slidingly openable and closable tarpaulin (2) attached to laterally slidable elongated support means (5), which folding support (10) has an exterior arranged to push against the tarpaulin (2) and an interior located opposite to the exterior, the folding support (10) comprising the following portions:
- first and second end portions (12, 13) located at two opposite ends of the folding support (10) and arranged to attach the folding support (10) to two of said elongated support means (5);
- a first rigid portion (16) hingedly connected via a first folding line (14) to said first end portion (12), and a second rigid portion (17) hingedly connected via a second folding line (18) to said second end portion (13); and
- a flexible central portion (18) having a first end (19) that is contiguous with said first rigid portion (16) and a second end (20) that is contiguous with said second rigid portion (17),
wherein said rigid portions (16, 17) are mutually pivotable about said central portion (18) between a folded shut position of the folding support (10), in which said folding lines (14, 15) are at a minimal distance to each other, and a folded open position of the folding support (10), in which said folding lines (14, 15) are at a maximal distance to each other,
**characterized in that**,
in said folded open position of the folding support (10), said central portion (18) has a length (D), measured along the shortest possible straight line between said ends (19, 20), of 4 cm to 12 cm, and that, also in said folded open position of the folding support (10), said central portion (18) has a concave interior having a first sagittal height (P₁) comprised between 1.5 and 25% of said length (D) and a convex exterior having a second sagittal height (P₂) comprised between 1.5 and 25% of said length (D).

2. Folding support (10) according to claim 1, **characterized in that** said central portion (18) has a center and a thickness (d) that decreases from both of its ends (19, 20) towards said center.

3. Folding support (10) according to claim 1 or 2, **characterized in that**, in said folded open position of the folding support (10), the exterior of said central portion (18) and the exteriors of said rigid portions (16, 17) at the location of said ends (19, 20) form an angle (β) comprised between 150° and 177°, wherein said angle (β) is preferably greater than 160° and more preferably greater than 170°.

4. Folding support (10) according to any of the previous claims, **characterized in that** said first sagittal height (P₁) and said second sagittal height (P₂) are smaller than 20% of said length (D), preferably smaller than 15%, more preferably smaller than 10% and most preferably smaller than 5% of said length (D), wherein said first sagittal height (P₁) and said second sagittal height (P₂) are preferably greater than 2.0% of said length (D) and more preferably greater than 2.5% of said length (D).

5. Folding support (10) according to any of the previous claims, **characterized in that** said length (D) of said central portion (18) is greater than 5 cm, preferably greater than 6 cm, and smaller than 9.5 cm, preferably smaller than 7 cm.

6. Folding support (10) according to any of the previous claims, **characterized in that** said concave interior forms a first arc, in particular a circular arc, and that said convex exterior forms a second arc, in particular a circular arc.

7. Folding support (10) according to claim 6, **characterized in that** each of said arcs has a radius of curvature comprised between 10 and 100 cm, which radius of curvature is preferably greater than 15 cm, more preferably greater than 20 cm, and which radius of curvature is preferably smaller than 50 cm, more preferably smaller than 30 cm.

8. Folding support (10) according to claim 6, **characterized in that** each of said arcs extends from said first end (19) up to said second end (20), wherein the radius of curvature of each of the arcs at each point is comprised between 10 and 100 cm, wherein the radius of curvature of each of the arcs at each point is preferably greater than 15 cm and more preferably greater than 20 cm, and wherein the radius of curvature of each of the arcs at each point is preferably smaller than 50 cm and more preferably smaller than 30 cm.

9. Folding support (10) according to claim 8, **characterized in that** each of said arcs is a circular arc of which the radius of curvature is constant.

10. Folding support (10) according to any of the previous claims, **characterized in that** the folding support (10) is manufactured in one piece from a plastic material, preferably a thermoplastic plastic material, in particular comprising polypropylene.

11. Folding support (10) according to any of the previous claims, **characterized in that**, when moving the folding support (10) from said folded open position to said folded shut position, said rigid portions (16, 17) hingedly pivot about said folding lines (14, 15) over an angle of at least 60°, preferably at least 70° and more preferably at least 80°.

12. Folding support (10) according to any of the previous claims, **characterized in that** said first folding line (14) is parallel to said second folding line (15) or that said first folding line (14) and said second folding line (15) form an angle relative to each other which is smaller than 10°.

13. Folding support (10) according to any of the previous claims, **characterized in that** said end portions (12, 13) each comprise a snapping system (11), which snapping systems (11) are arranged to cooperate with a corresponding snapping system on said elongated support means (5) to snap-fix the folding support (10) thereto.

14. Folding support (10) according to any of the previous claims, **characterized in that** said rigid portions (16, 17) comprise a substantially planar plate (28, 29) having a number of upright ribs (30, 31), wherein said planar plates (28, 29) form a portion of the interior of the folding support (10) and wherein said upright ribs (30, 31) form a portion of the exterior of the folding support (10).

15. Construction (1) for suspending a tarpaulin (2) for partitioning off a cargo space, which construction (1) comprises:
- an upper supporting rail (3) located at the level of a top of the cargo space;
- a lower supporting rail (4) located at the level of a bottom of the cargo space; and
- a plurality of elongated support means (5) that are laterally slidable along said upper (3) and lower supporting rails (4), connecting said upper supporting rail (3) to said lower supporting rail (4),
wherein said tarpaulin (2) is arranged to be attached to said elongated support means (5) so that the tarpaulin (2), by laterally sliding the elongated support means (5), is moveable between an open position and a closed position,
**characterized in that** the construction (1) further comprises a plurality of folding supports (10) according to any of the previous claims, wherein each of the folding supports (10) is attached to two adjacent elongated support means (5).

16. Construction (1) according to claim 15, **characterized in that** the construction (1) comprises:
- a further tarpaulin;
- a further upper supporting rail located at the level of the top of the cargo space and extending parallel to said upper supporting rail;
- a plurality of roof bars that are slidable along said upper supporting rail and said further upper supporting rail, interconnecting said upper supporting rails, wherein said further tarpaulin is arranged to be attached to said roof bars so that the tarpaulin, by laterally sliding the roof bars, is moveable between an open position and a closed position; and
- a plurality of further folding supports (10) according to any of the claims 1 to 12, wherein each of the further folding supports (10) is attached to two adjacent roof bars.

17. Construction (1) for suspending a tarpaulin (2) for covering a cargo space, which construction (1) comprises:
- an upper supporting rail and a further upper supporting rail, each located at the level of a top of the cargo space and extending parallel to each other; and
- a plurality of roof bars that are slidable along said upper supporting rail and said further upper supporting rail (5), interconnecting said upper supporting rails,
wherein said tarpaulin (2) is arranged to be attached to said roof bars (5) so that the tarpaulin (2), by laterally sliding the roof bars (5), is moveable between an open position and a closed position,
**characterized in that** the construction further comprises a plurality of folding supports (10) according to any of the claims 1 to 12, wherein each of the folding supports (10) is attached to two adjacent roof bars (5).

18. Transport vehicle having a cargo space, a tarpaulin (2) for covering the cargo space and a construction (1) according to any of the claims 15 to 17 for suspending said tarpaulin (2).

## Patentansprüche

1. Falthilfsmittel (10) zum Falten einer verschiebend zu öffnenden und zu schließenden Plane (2), befestigt an seitlich verschiebbaren länglichen Stützen (5), wobei das Falthilfsmittel (10) eine Außenseite hat, angeordnet, um gegen die Plane (2) zu drücken, und eine Innenseite gelegen gegenüber der Außenseite, wobei das Falthilfsmittel (10) die folgenden Abschnitte umfasst:
- erste und zweite Endabschnitte (12, 13) gelegen an zwei gegenüberliegenden Ende des Falthilfsmittels (10) und angeordnet, um das Falthilfsmittel (10) an zwei der erwähnten länglichen Stützen (5) zu befestigen;
- einen ersten steifen Abschnitt (16), gelenkig über eine erste Faltlinie (14) mit dem erwähnten ersten Endabschnitt (12) verbunden, und einen zweiten steifen Abschnitt (17), gelenkig über eine zweite Faltlinie (18) mit dem erwähnten zweiten Endabschnitt (13) verbunden; und
- einen biegsamen mittleren Abschnitt (18) mit einem ersten Ende (19), das an den erwähnten ersten steifen Abschnitt (16) anschließt, und einem zweiten Ende (20), das an den erwähnten zweiten steifen Abschnitt (17) anschließt,
wobei die erwähnten steifen Abschnitte (16, 17) gegenseitig schwenkbar sind um den erwähnten mittleren Abschnitt (18) zwischen einer gefalteten geschlossenen Position des Falthilfsmittels (10), in der die erwähnten Faltlinien (14, 15) in einem minimalen Abstand voneinander liegen, und einer gefalteten offenen Position des Falthilfsmittels (10), in der die erwähnten Faltlinien (14, 15) in einem maximalen Abstand voneinander liegen,
**dadurch gekennzeichnet, dass**
der erwähnte mittlere Abschnitt (18), in der erwähnten gefalteten offenen Position des Falthilfsmittels (10), eine Länge (D), gemessen entlang der kürzesten möglichen Gerade zwischen den erwähnten Enden (19, 20), von 4 cm bis 12 cm hat, und dadurch, dass der erwähnte mittlere Abschnitt (18), auch in der gefalteten offenen Position des Falthilfsmittels (10), eine konkave Innenseite mit einer ersten Pfeilhöhe (P₁) von zwischen 1,5 und 25 % der erwähnten Länge (D), und eine konvexe Außenseite mit einer zweiten Pfeilhöhe (P₂) von zwischen 1,5 und 25 % der erwähnten Länge (D) hat.

2. Falthilfsmittel (10) nach Anspruch 1, **dadurch gekennzeichnet, dass** der erwähnte mittlere Abschnitt (18) eine Mitte hat und eine Dicke (d), die von beiden seiner Enden (19, 20) zur erwähnten Mitte hin abnimmt.

3. Falthilfsmittel (10) nach Anspruch 1 oder 2, **dadurch gekennzeichnet, dass**, in der erwähnten gefalteten offenen Position des Falthilfsmittels (10), die Außenseite des erwähnten mittleren Abschnitts (18) und die Außenseiten der erwähnten steifen Abschnitte (16, 17) an der Stelle der erwähnten Enden (19, 20) einen Winkel (β) von zwischen 150° und 177° bilden, wobei der erwähnte Winkel (β) bevorzugt größer ist als 160° und noch besser größer als 170°.

4. Falthilfsmittel (10) nach irgendeinem der vorigen Ansprüche, **dadurch gekennzeichnet, dass** die erwähnte erste Pfeilhöhe (P₁) und die erwähnte zweite Pfeilhöhe (P₂) kleiner als 20 % der erwähnten Länge (D) sind, bevorzugt kleiner als 15 %, noch besser kleiner als 10 % und am besten kleiner als 5 % der erwähnten Länge (D), wobei die erwähnte erste Pfeilhöhe (P₁) und die erwähnte zweite Pfeilhöhe (P₂) bevorzugt größer sind als 2,0 % der erwähnten Länge (D) und noch besser größer als 2,5 % der erwähnten Länge (D).

5. Falthilfsmittel (10) nach irgendeinem der vorigen Ansprüche, **dadurch gekennzeichnet, dass** die erwähnte Länge (D) des erwähnten mittleren Abschnitts (18) größer als 5 cm ist, bevorzugt größer als 6 cm, und kleiner als 9,5 cm, bevorzugt kleiner als 7 cm.

6. Falthilfsmittel (10) nach irgendeinem der vorigen Ansprüche, **dadurch gekennzeichnet, dass** die erwähnte konkave Innenseite einen ersten Bogen bildet, insbesondere einen Kreisbogen, und dadurch, dass die erwähnte konvexe Außenseite einen zweiten Bogen bildet, insbesondere einen Kreisbogen.

7. Falthilfsmittel (10) nach Anspruch 6, **dadurch gekennzeichnet, dass** jeder der erwähnten Bögen einen Krümmungsradius von zwischen 10 und 100 cm hat, wobei der Krümmungsradius bevorzugt größer als 15 cm ist, noch besser größer als 20 cm, und wobei der Krümmungsradius bevorzugt kleiner als 50 cm ist, noch besser kleiner als 30 cm.

8. Falthilfsmittel (10) nach Anspruch 6, **dadurch gekennzeichnet, dass** sich jeder der erwähnten Bögen vom erwähnten ersten Ende (19) bis zum erwähnten zweiten Ende (20) erstreckt, wobei der Krümmungsradius jedes der Bögen an jedem Punkt zwischen 10 und 100 cm beträgt, wobei der Krümmungsradius jedes der Bögen an jedem Punkt bevorzugt größer als 15 cm und noch besser größer als 20 cm ist, und wobei der Krümmungsradius jedes der Bögen an jedem Punkt bevorzugt kleiner als 50 cm und noch besser kleiner als 30 cm ist.

9. Falthilfsmittel (10) nach Anspruch 8, **dadurch gekennzeichnet, dass** jeder der erwähnten Bögen ein Kreisbogen ist, dessen Krümmungsradius konstant ist.

10. Falthilfsmittel (10) nach irgendeinem der vorigen Ansprüche, **dadurch gekennzeichnet, dass** das Falthilfsmittel (10) in einem Stück aus einem Kunststoffmaterial hergestellt ist, bevorzugt ein thermoplastisches Kunststoffmaterial, welches insbesondere Polypropylen umfasst.

11. Falthilfsmittel (10) nach irgendeinem der vorigen Ansprüche, **dadurch gekennzeichnet, dass** die erwähnten steifen Abschnitte (16, 17), beim Bewegen des Falthilfsmittels (10) von der erwähnten gefalteten offenen Position in die erwähnte gefaltete geschlossene Position, gelenkig um die erwähnten Faltlinien (14, 15) schwenken, über einen Winkel von mindestens 60°, bevorzugt mindestens 70° und noch besser mindestens 80°.

12. Falthilfsmittel (10) nach irgendeinem der vorigen Ansprüche, **dadurch gekennzeichnet, dass** die erwähnte erste Faltlinie (14) parallel zur erwähnten zweiten Faltlinie (15) verläuft, oder dadurch, dass die erwähnte erste Faltlinie (14) und die erwähnte zweite Faltlinie (15) einen Winkel in Bezug zueinander bilden, der kleiner ist als 10°.

13. Falthilfsmittel (10) nach irgendeinem der vorigen Ansprüche, **dadurch gekennzeichnet, dass** die erwähnten Endabschnitte (12, 13) jeweils ein Klicksystem (11) umfassen, wobei die Klicksysteme (11) angeordnet sind, um mit einem entsprechenden Klicksystem auf den erwähnten länglichen Stützen (5) zusammenzuwirken, um das Falthilfsmittel (10) daran festzuklicken.

14. Falthilfsmittel (10) nach irgendeinem der vorigen Ansprüche, **dadurch gekennzeichnet, dass** die erwähnten steifen Abschnitte (16, 17) eine im Wesentlichen flache Platte (28, 29) mit einer Anzahl aufrechter Rippen (30, 31) umfassen, wobei die erwähnten flachen Platten (28, 29) einen Abschnitt der Innenseite des Falthilfsmittels (10) bilden und wobei die erwähnten aufrechten Rippen (30, 31) einen Abschnitt der Außenseite des Falthilfsmittels (10) bilden.

15. Konstruktion (1) zum Aufhängen einer Plane (2) zum Abtrennen eines Laderaums, wobei die Konstruktion (1) Folgendes umfasst:
- eine obere Trageschiene (3) gelegen auf Höhe der Oberseite des Laderaums;
- eine untere Trageschiene (4) gelegen auf Höhe des Bodens des Laderaums; und
- eine Vielzahl von länglichen Stützen (5), die seitlich verschiebbar entlang der erwähnten oberen (3) und unteren Trageschienen (4) sind und die erwähnte obere Trageschiene (3) mit der erwähnten unteren Trageschiene (4) verbinden,
wobei die erwähnte Plane (2) angeordnet ist, um an den erwähnten länglichen Stützen (5) befestigt zu werden, sodass die Plane (2), durch seitliches Verschieben der länglichen Stützen (5), zwischen einer offenen Position und einer geschlossenen Position beweglich ist,
**dadurch gekennzeichnet, dass** die Konstruktion (1) ferner eine Vielzahl von Falthilfsmitteln (10) nach irgendeinem der vorigen Ansprüche umfasst, wobei jedes der Falthilfsmittel (10) an zwei nebeneinander liegenden länglichen Stützen (5) befestigt ist.

16. Konstruktion (1) nach Anspruch 15, **dadurch gekennzeichnet, dass** die Konstruktion (1) Folgendes umfasst:
- eine weitere Plane;
- eine weitere obere Trageschiene gelegen auf Höhe der Oberseite des Laderaums und sich parallel zur erwähnten oberen Trageschiene erstreckend;
- eine Vielzahl von Dachbügeln, die verschiebbar entlang der erwähnten oberen Trageschiene und der erwähnten weiteren oberen Trageschiene sind und so die erwähnten oberen Trageschienen miteinander verbinden, wobei die erwähnte weitere Plane angeordnet ist, um an den erwähnten Dachbügeln befestigt zu werden, sodass die Plane, durch seitliches Verschieben der Dachbügel, zwischen einer offenen Position und einer geschlossenen Position beweglich ist; und
- eine Vielzahl von weiteren Falthilfsmitteln (10) nach irgendeinem der Ansprüche 1 bis 12, wobei jedes der weiteren Falthilfsmittel (10) an zwei nebeneinander liegenden Dachbügeln befestigt ist.

17. Konstruktion (1) zum Aufhängen einer Plane (2) zum Abdecken eines Laderaums, wobei die Konstruktion (1) Folgendes umfasst:
- eine obere Trageschiene und eine weitere obere Trageschiene, jede gelegen auf Höhe einer Oberseite des Laderaums und sich parallel zueinander erstreckend; und
- eine Vielzahl von Dachbügeln, die verschiebbar entlang der erwähnten oberen Trageschiene und der erwähnten weiteren oberen Trageschiene (5) sind und so die erwähnten oberen Trageschienen miteinander verbinden,
wobei die erwähnte Plane (2) angeordnet ist, um an den erwähnten Dachbügeln (5) befestigt zu werden, sodass die Plane (2), durch seitliches Verschieben der Dachbügel (5), zwischen einer offenen Position und einer geschlossenen Position beweglich ist,
**dadurch gekennzeichnet, dass** die Konstruktion ferner eine Vielzahl von Falthilfsmitteln (10) nach irgendeinem der Ansprüche 1 bis 12 umfasst, wobei jedes der Falthilfsmittel (10) an zwei nebeneinander liegenden Dachbügeln (5) befestigt ist.

18. Transportfahrzeug mit einem Laderaum, einer Plane (2) zum Abdecken des Laderaums und einer Konstruktion (1) nach irgendeinem der Ansprüche 15 bis 17 zum Aufhängen der erwähnten Plane (2).

## Revendications

1. Support pliant (10) pour plier une bâche (2) pouvant être ouverte et fermée par coulissement, fixée à des moyens de support allongés (5) pouvant coulisser latéralement, lequel support pliant (10) a un extérieur disposé pour pousser contre la bâche (2) et un intérieur situé à l'opposé de l'extérieur, le support pliant (10) comprenant les parties suivantes :
- des première et deuxième parties d'extrémité (12, 13) situées à deux extrémités opposées du support pliant (10) et agencées pour fixer le support pliant (10) à deux desdits moyens de support allongés (5) ;
- une première partie rigide (16) reliée de manière articulée par une première ligne pliante (14) à ladite première partie d'extrémité (12), et une deuxième partie rigide (17) reliée de manière articulée par une deuxième ligne pliante (18) à ladite deuxième partie d'extrémité (13) ;
et
- une partie centrale flexible (18) ayant une première extrémité (19) qui est contiguë à ladite première partie rigide (16) et une deuxième extrémité (20) qui est contiguë à ladite deuxième partie rigide (17),
dans lequel lesdites parties rigides (16, 17) peuvent pivoter mutuellement autour de ladite partie centrale (18) entre une position fermée pliée du support pliant (10), dans laquelle lesdites lignes pliantes (14, 15) sont à une distance minimale l'une de l'autre, et une position ouverte pliée du support pliant (10), dans laquelle lesdites lignes pliantes (14, 15) sont à une distance maximale l'une de l'autre,
**caractérisé en ce que**,
dans ladite position ouverte pliée du support pliant (10), ladite partie centrale (18) a une longueur (D), mesurée le long de la ligne droite la plus courte possible entre lesdites extrémités (19, 20), de 4 cm à 12 cm, et que, également dans ladite position ouverte pliée du support pliant (10), ladite partie centrale (18) a un intérieur concave ayant une première hauteur sagittale (P1) comprise entre 1,5 et 25 % de ladite longueur (D) et un extérieur convexe ayant une deuxième hauteur sagittale (P2) comprise entre 1,5 et 25 % de ladite longueur (D).

2. Support pliant (10) selon la revendication 1, **caractérisé en ce que** ladite partie centrale (18) a un centre et une épaisseur (d) qui diminue à partir de ses deux extrémités (19, 20) vers ledit centre.

3. Support pliant (10) selon la revendication 1 ou 2, **caractérisé en ce que**, dans ladite position ouverte pliée du support pliant (10), l'extérieur de ladite partie centrale (18) et les extérieurs desdites parties rigides (16, 17) à l'emplacement desdites extrémités (19, 20) forment un angle (β) compris entre 150° et 177°, dans lequel ledit angle (β) est de préférence supérieur à 160° et plus préférablement supérieur à 170°.

4. Support pliant (10) selon l'une quelconque des revendications précédentes, **caractérisé en ce que** ladite première hauteur sagittale (P1) et ladite deuxième hauteur sagittale (P2) sont inférieures à 20 % de ladite longueur (D), de préférence inférieures à 15 %, plus préférablement inférieures à 10 % et plus préférablement inférieures à 5 % de ladite longueur (D), dans lequel ladite première hauteur sagittale (P1) et ladite deuxième hauteur sagittale (P2) sont de préférence supérieures à 2,0 % de ladite longueur (D) et plus préférablement supérieures à 2,5 % de ladite longueur (D).

5. Support pliant (10) selon l'une quelconque des revendications précédentes, **caractérisé en ce que** ladite longueur (D) de ladite partie centrale (18) est supérieure à 5 cm, de préférence supérieure à 6 cm, et inférieure à 9,5 cm, de préférence inférieure à 7 cm.

6. Support pliant (10) selon l'une quelconque des revendications précédentes, **caractérisé en ce que** ledit intérieur concave forme un premier arc, en particulier un arc circulaire, et que ledit extérieur convexe forme un deuxième arc, en particulier un arc circulaire.

7. Support pliant (10) selon la revendication 6, **caractérisé en ce que** chacun desdits arcs a un rayon de courbure compris entre 10 et 100 cm, lequel rayon de courbure est de préférence supérieur à 15 cm, plus préférablement supérieur à 20 cm, et lequel rayon de courbure est de préférence inférieur à 50 cm, plus préférablement inférieur à 30 cm.

8. Support pliant (10) selon la revendication 6, **caractérisé en ce que** chacun desdits arcs s'étend de ladite première extrémité (19) jusqu'à ladite deuxième extrémité (20), dans lequel le rayon de courbure de chacun des arcs à chaque point est compris entre 10 et 100 cm, dans lequel le rayon de courbure de chacun des arcs à chaque point est de préférence supérieur à 15 cm et plus préférablement supérieur à 20 cm, et dans lequel le rayon de courbure de chacun des arcs à chaque point est de préférence inférieur à 50 cm et plus préférablement inférieur à 30 cm.

9. Support pliant (10) selon la revendication 8, **caractérisé en ce que** chacun desdits arcs est un arc circulaire dont le rayon de courbure est constant.

10. Support pliant (10) selon l'une quelconque des revendications précédentes, **caractérisé en ce que** le support pliant (10) est fabriqué d'une seule pièce en matière plastique, de préférence en matière thermoplastique, comprenant notamment du polypropylène.

11. Support pliant (10) selon l'une quelconque des revendications précédentes, **caractérisé en ce que**, lors du déplacement du support pliant (10) de ladite position ouverte pliée à ladite position fermée pliée, lesdites parties rigides (16, 17) pivotent de manière articulée autour desdites lignes pliantes (14, 15) sur un angle d'au moins 60°, de préférence d'au moins 70° et plus préférablement d'au moins 80°.

12. Support pliant (10) selon l'une quelconque des revendications précédentes, **caractérisé en ce que** ladite première ligne pliante (14) est parallèle à ladite deuxième ligne pliante (15) ou **en ce que** ladite première ligne pliante (14) et ladite deuxième ligne pliante (15) forment un angle l'une par rapport à l'autre qui est inférieur à 10°.

13. Support pliant (10) selon l'une quelconque des revendications précédentes, **caractérisé en ce que** lesdites parties d'extrémité (12, 13) comprennent chacune un système d'encliquetage (11), lesquels systèmes d'encliquetage (11) sont agencés pour coopérer avec un système d'encliquetage correspondant sur lesdits moyens de support allongés (5) pour y fixer par encliquetage le support pliant (10).

14. Support pliant (10) selon l'une quelconque des revendications précédentes, **caractérisé en ce que** lesdites parties rigides (16, 17) comprennent une plaque sensiblement plane (28, 29) ayant un certain nombre de nervures verticales (30, 31), dans lequel lesdites plaques planes (28, 29) forment une partie de l'intérieur du support pliant (10) et dans lequel lesdites nervures verticales (30, 31) forment une partie de l'extérieur du support pliant (10).

15. Construction (1) pour suspendre une bâche (2) destinée à cloisonner un espace de chargement, laquelle construction (1) comprend :
- un rail de support supérieur (3) situé au niveau d'une partie supérieure de l'espace de chargement ;
- un rail de support inférieur (4) situé au niveau d'un fond de l'espace de chargement ; et
- une pluralité de moyens de support allongés (5) qui peuvent coulisser latéralement le long desdits rails de support supérieur (3) et inférieur (4), reliant ledit rail de support supérieur (3) audit rail de support inférieur (4),
où ladite bâche (2) est agencée pour être fixée auxdits moyens de support allongés (5) de sorte que la bâche (2), en faisant coulisser latéralement les moyens de support allongés (5), est mobile entre une position ouverte et une position fermée,
**caractérisé en ce que** la construction (1) comprend en outre une pluralité de supports pliants (10) selon l'une des revendications précédentes,
où chacun des supports pliants (10) est fixé à deux moyens de support allongés adjacents (5).

16. Construction (1) selon la revendication 15, **caractérisée en ce que** la construction (1) comprend :
- une autre bâche ;
- un autre rail de support supérieur situé au niveau du haut de l'espace de chargement et s'étendant parallèlement audit rail de support supérieur ;
- une pluralité de barres de toit qui peuvent coulisser le long dudit rail de support supérieur et dudit autre rail de support supérieur, interconnectant lesdits rails de support supérieurs, dans lequel ladite autre bâche est agencée pour être fixée auxdites barres de toit de sorte que la bâche, en faisant coulisser latéralement les barres de toit, est mobile entre une position ouverte et une position fermée ; et
- une pluralité d'autres supports pliants (10) selon l'une quelconque des revendications 1 à 12, dans laquelle chacun des autres supports pliants (10) est fixé à deux barres de toit adjacentes.

17. Construction (1) pour suspendre une bâche (2) destinée à couvrir un espace de chargement, laquelle construction (1) comprend :
- un rail de support supérieur et un autre rail de support supérieur, chacun étant situé au niveau d'un sommet de l'espace de chargement et s'étendant parallèlement l'un à l'autre ; et
- une pluralité de barres de toit qui peuvent coulisser le long dudit rail de support supérieur et dudit autre rail de support supérieur (5), interconnectant lesdits rails de support supérieurs,
dans laquelle ladite bâche (2) est agencée pour être fixée auxdites barres de toit (5) de sorte que la bâche (2), en faisant coulisser latéralement les barres de toit (5), est mobile entre une position ouverte et une position fermée, **caractérisée en ce que** la construction comprend en outre une pluralité de supports pliants (10) selon l'une quelconque des revendications 1 à 12, où chacun des supports pliants (10) est fixé à deux barres de toit (5) adjacentes.

18. Véhicule de transport ayant un espace de chargement, une bâche (2) pour couvrir l'espace de chargement et une construction (1) selon l'une quelconque des revendications 15 à 17 pour suspendre ladite bâche (2).
